# EUROPÄISCHE PATENTANMELDUNG

(11) **EP 0 733 392 A1**
(43) Veröffentlichungstag der Anmeldung: **25.09.1996**
(21) Anmeldenummer: 96104325.4
(22) Anmeldetag: 19.03.1996
(51) Int. Cl.: B01D 46/02

(54) **Stützkörper für schlauchförmige Filterelemente aus flexiblem Filtermaterial**

(30) Priorität: 21.03.1995 DE 19510131
(71) Anmelder: Intensiv-Filter GmbH & Co KG, D-42555 Velbert - Langenberg (DE)
(72) Erfinder: Kordas, Friedel, D-45663 Recklinghausen (DE); Knebel, Bettina, D-45133 Essen (DE); Höffken Peter, D-45239 Essen (DE)
(74) Vertreter: Stenger, Watzke & Ring Patentanwälte

(57) **Zusammenfassung**

Vorgeschlagen wird ein Stützkörper für schlauchförmige Filterelemente aus flexiblem Filtermaterial. Um einen solchen Stützkörper mit gleichartigen weiteren Stützkörpern auf einfache Art und Weise zu einem langgestreckten Filterstützkörper zusammenzusetzen, der besonders filterschonend gestaltet ist und sich aus wenigen Teilen preiswert herstellen läßt, setzt sich der Stützkörper zusammen aus
- Längsdrähten (8), die nach Art eines Korbes angeordnet sind,
- einem an dem eine Ende des Stützkörpers an den Innenseiten der Längsdrähte (8) befestigten ersten Ring,
- an dem anderen Ende des Stützkörpers ausgebildeten, nach innen versetzt geformten Abkröpfungen (14) der Längsdrähte (8),
- einem mit den abgekröpften Enden der Längsdrähte (8) verbundenen, an deren Außenseiten befestigten zweiten Ring (12), wobei zwischen zweiten Ring (12) und Abkröpfung (14) ein axialer Abstand zur Aufnahme des ersten Rings (11) eines weiteren Stützkörpers vorgesehen ist,
- einer Unterbrechung des ersten Rings (11) und/oder des zweiten Rings (12) zwischen zwei benachbarten Längsdrähten (8) sowie
- einer der Unterbrechung (13,15) gegenüberliegenden Erweiterung (16) des zweiten oder Verengung des ersten Rings, wobei die Erstreckung der Erweiterung (16) bzw. Verengung in Umfangsrichtung gleich ist dem Abstand zwischen benachbarten Längsdrähten (8).

## Beschreibung

Die Erfindung betrifft einen Stützkörper für schlauchförmige Filterelemente aus flexiblem Filtermaterial. Solche Stützkörper dienen bei Staubfiltern dazu, bei dem aus flexiblem, textilem Gewebe oder Filz bestehenden Filtermaterial die runde Schlauchform im Betriebszustand gegen den auf das Filterelement wirkenden Differenzdruck aufrechtzuerhalten. Filterelemente werden in der modernen Entstaubungstechnik bis zu Längen von ca. 8 m eingesetzt. Aus Transport- und Handhabungsgründen ist es nicht möglich, für derart lange Filterelemente einteilige Stützkörper zu verwenden. Es ist daher bekannt, solche Stützkörperlängen durch Zusammenfügen mehrerer einzelner Stützkörper herzustellen. Ein solcher zusammensetzbarer Stützkörper ist z.B. aus der DE 37 09 365 A1 bekannt.

Bei den bekannten Stützkörpern ist u.a. von Nachteil, daß das Herausziehen der Stützkörper aus dem Filterschlauch zu einem erheblichen Rückverformungswiderstand führt. Ursächlich hierfür ist insbesondere, daß die in Längsrichtung verlaufenden Drähte der einzelnen Stützkörper nicht exakt zueinander fluchten, so daß sich bei jedem Übergang von einem Stützkörper auf den nächsten die Richtung der radialen Druckeinwirkung der Längsdrähte auf das Filtermaterial ändert.

Der Erfindung liegt die **Aufgabe** zugrunde, einen mit gleichartigen weiteren Stützkörpern auf einfache Art und Weise zu einem langgestreckten Filterstützkorb zusammensetzbaren Stützkörper für schlauchförmige Filterelemente aus flexiblem Filtermaterial zu schaffen, der sich dem Filterschlauch widerstandsarm entnehmen und aus wenigen Teilen preiswert herstellen läßt.

Zur **Lösung** dieser Aufgabe wird ein Stützkörper für schlauchförmige Filterelemente aus flexiblem Filtermaterial vorgeschlagen, mit
a) Längsdrähten, die nach Art eines Korbes angeordnet sind und im wesentlichen die äußere Gestalt des Stützkörpers bestimmen,
b) einem an dem einen Ende des Stützkörpers angeordneten, an den Innenseiten der Längsdrähte befestigten ersten Ring,
c) an dem anderen Ende des Stützkörpers ausgebildeten, nach innen versetzt geformten Abkröpfungen der Längsdrähte,
d) einem mit den abgekröpften Enden der Längsdrähte verbundenen, an deren Außenseiten befestigten zweiten Ring, wobei zwischen zweitem Ring und Abkröpfung ein axialer Abstand vorhanden ist, der zur Aufnahme des ersten Rings eines weiteren Stützkörpers vorgesehen ist,
e) einer Unterbrechung des ersten Rings und/oder des zweiten Rings zwischen zwei benachbarten Längsdrähten sowie
f) einer der Unterbrechung gegenüberliegenden Erweiterung des zweiten oder Verengung des ersten Rings, wobei die Erstreckung der Erweiterung bzw. Verengung in Umfangsrichtung gleich ist dem Abstand zwischen benachbarten Längsdrähten.

Ein solcher Stützkörper ist aus sehr wenigen Einzelteilen preiswert herstellbar. Die Einzelteile sind der obere und untere Ring sowie die dazwischen verlaufenden Längsdrähte. Je nach Länge des Stützkörpers können ferner weitere Ringe über dessen Länge angeordnet sein. Der Stützkörper verfügt erfindungsgemäß über eine Erweiterung des zweiten oder eine Verengung des ersten Rings, wobei deren Erstreckung in Umfangsrichtung des Rings gleich ist dem Abstand zwischen benachbarten Längsdrähten. Auf diese Weise wird beim Zusammenfügen zweier Stützkörper zugleich eine Zentrierung beider Stützkörper zueinander erreicht. Die Längsdrähte beider Stützkörper gelangen von selbst in eine zueinander fluchtende Ausrichtung, so daß sich ein solcherart zusammengesetzter Filterstützkorb besonders leicht und widerstandsarm in einen vorbereiteten Filterschlauch aus flexiblem Filtermaterial einsetzen, und aus diesem wieder herausziehen läßt.

Mit der Erfindung wird ferner eine besonders sichere Verbindung des Stützkörpers mit dem jeweils benachbarten Stützkörper erreicht. Anders als beim Stand der Technik findet keine druckabhängige Verrastung zweier Stützkörper statt, sondern diese werden formschlüssig miteinander verklammert. Hierzu ist erfindungsgemäß zwischen dem zweiten Ring und der Abkröpfung ein axialer Abstand vorhanden, der exakt zur Aufnahme des ersten Rings des benachbarten Stützkörpers geeignet ist. Die so hergestellte Verbindung zwischen den beiden Stützkörpern läßt sich nur lösen, indem der mit einer Unterbrechung versehene Ring in dem durch die Unterbrechung gegebenen Spielraum von Hand verengt wird, worauf sich der betreffende Stützkörper dann lösen läßt. Auch der Zusammenbau erfolgt, indem der Stützkörper im Bereich des Ringes zunächst zusammengedrückt wird, er dann in die dafür vorgesehene Aufnahme des anderen Stützkörpers eingesetzt, und wieder entspannt wird. Hierbei verriegeln die beiden Ringe miteinander, so daß sich die Stützkörper unter Aufwendung allein axialer Kräfte nicht mehr voneinander trennen lassen.

Erster und zweiter Ring des Stützkörpers weisen vorzugsweise dieselbe Größe auf. Aus Gründen der preiswerten Herstellbarkeit können diese Ringe sowie die Längsdrähte aus metallischen Runddrähten bestehen.

Ferner wird vorgeschlagen, daß die Abkröpfungen durch zweimaliges rechtwinkliges Biegen der Enden der Längsdrähte gebildet sind. Die Abkröpfungen wirken hierbei wie eine umlaufende Nut, in die der korrespondierende Ring des benachbarten Stützkörpers bündig eingreift. Auf weitere Maßnahmen zur axialen Lagefixierung kann hierdurch verzichtet werden.

Gemäß einer bevorzugten Weiterbildung des Stützkörpers ist die Erweiterung bzw. Verengung durch eine geeignete Verformung des jeweiligen Ringes gebildet. Auf diese Weise übernimmt der Ring allein aufgrund seiner durch Biegen erzeugten Gestalt die Funktion einer Zentrierung zweier Stützkörper zueinander.

Aus den beschriebenen Stützkörpern zusammengesetzte Filterstützkörbe lassen sich infolge der Möglichkeit eines modulartigen Aufbaus einfach und preiswert herstellen, erlauben eine einfache und leichte Verbindung der einzelnen Stützkörper zu einem Filterstützkorb ohne die Zuhilfenahme von Werkzeugen, erlauben an den Verbindungsstellen zweier Stützkörper hohe Biegekräfte, ermöglichen eine Zentrierung der einzelnen Stützkörper mit jeweils gleicher Ausrichtung der Längsdrähte, und ermöglichen schließlich auch eine für das Filtermaterial schonende Befestigung des unteren Abschlußdeckels an dem untersten Stützkörper.

Ausführungsbeispiele der Erfindung werden nachfolgend unter Bezugnahme auf die zugehörigen Zeichnungen erläutert. Darin zeigen:
- Fig. 1: einen Teilausschnitt aus einem Staubfilter mit von einem Filterboden herabhängenden, an ihrer Innenseite durch Stützkörper abgestützten Filterschläuchen;
- Fig. 2: in verkürzter Darstellung den obersten Stützkörper sowie dessen Anbindung an die Einlaufdüse des Filterbodens;
- Fig. 3: einen weiteren Stützkörper vor dessen Verbindung mit dem in Fig. 2 dargestellten Stützkörper;
- Fig. 4: einen Abschlußdeckel, der von unten an den in Fig. 3 dargestellten Stützkörper ansetzbar ist;
- Fig. 5: in einer Benutzungsdarstellung die Art und Weise, wie zwei Stützkörper an ihren Enden miteinander verklammert werden.

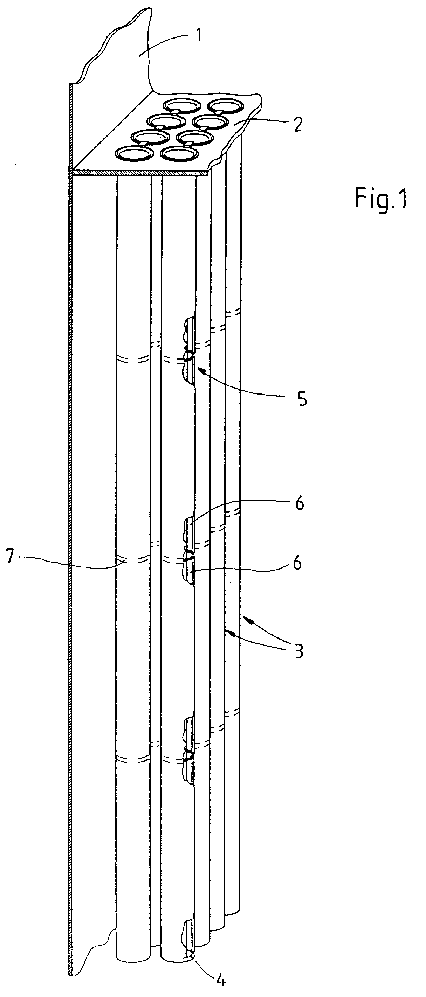

In Fig. 1 ist ein segmentartiger Ausschnitt aus einem industriellen Staubfilter dargestellt, mit einer senkrecht stehenden Gehäusewand 1, einem waagerecht angeordneten Filterboden 2, in dessen Öffnungen Filterschläuche 3 eingehängt sind. Unterhalb des Filterbodens 2 befindet sich der Staubraum, oberhalb befindet sich der an eine Unterdruckquelle angeschlossene Reinluftraum. Die in der zu reinigenden Luft befindlichen Staubpartikel lagern sich an den äußeren Mantelflächen der Filterschläuche 3 an. Von Zeit zu Zeit werden die Filterschläuche 3 von innen mit einem Druckstoß beaufschlagt, und auf diese Weise gereinigt. Den unteren Abschluß des Filterstützkörpers bildet ein Abschlußdeckel 4. Der Filterschlauch hat an seinem unteren Ende einen Boden, der in übergezogenem Zustand von dem Abschlußdeckel 4 abgestützt wird.

Durch zeichnerische Ausbrüche ist in Fig. 1 angedeutet, daß die Filterschläuche 3 gegen den nach innen wirkenden Saugdruck durch einen Filterstützkorb 5 abgestützt sind. Da die Filterschläuche 3 beträchtliche Längen von bis zu 8 m aufweisen können, ist dieser Filterstützkorb 5 aus mehreren Stützkörpern 6 zerlegbar ausgebildet. Zum Austausch des Filterstützkorbes 5 wird dieser nach oben aus dem Filterboden 2 herausgezogen, bis die erste Trennebene 7 zwischen zwei Stützkörben 6 erreichbar ist. Sodann werden diese beiden Stützkörbe voneinander getrennt, und die verbliebene Länge des Filterstützkorbes 5 weiter herausgezogen. In dieser Weise wird verfahren, bis sämtliche Stützkörper 6 dem Filterschlauch 3 entnommen sind. Der Einbau der Stützkörper 6 erfolgt in umgekehrter Reihenfolge, hierbei werden die einzelnen Stützkörper 6 oberhalb des Filterbodens 2 zusammengesetzt, und dann zunehmend in den lose herabhängenden Filterschlauch 3 hineingeschoben.

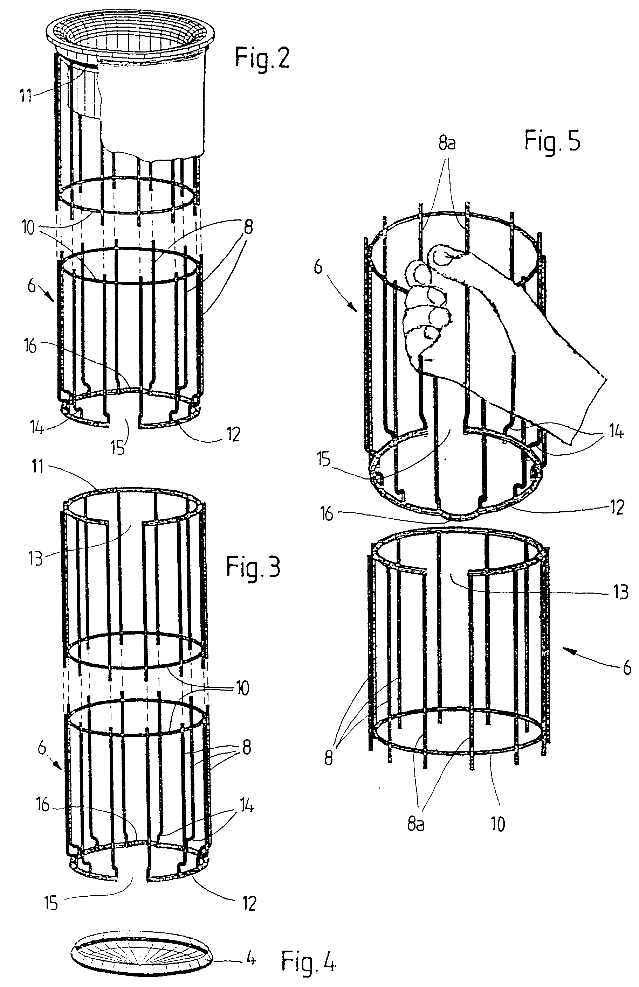

Sämtliche in den Filterschläuchen 3 sitzenden Stützkörper 6 sind gleich aufgebaut und lassen sich daher beliebig aus- und vertauschen. Dies wird durch die nachfolgend anhand der Figuren 2 bis 5 erläuterte Technik des Verklammerns zweier Stützkörper miteinander erreicht.

Die Stützkörper 6 sind in den Figuren 2 und 3 jeweils verkürzt dargestellt. Sie bestehen jeweils aus einer Vielzahl sich parallel zueinander erstreckender Längsdrähte 8, die im wesentlichen die Mantelfläche und damit die äußere Gestalt des Stützkörpers bestimmen. Zur Versteifung der Längsdrähte 8 sind innerhalb der Länge des Stützkörpers 8 mehrere Zwischenringe 10 vorgesehen. Die Zwischenringe 10 sind mit den Innenseiten der Längsdrähte 8 verbunden, z. B. über Schweißstellen.

Während die Zwischenringe 10 ausschließlich dazu dienen, die Längsdrähte 8 über deren Länge zu versteifen, sind an den Enden des Stützkörpers 6 Ringe 11,12 befestigt, die zusätzlich dazu dienen, zwei der Stützkörper 6 miteinander zu verklammern. Der beim Ausführungsbeispiel oben angeordnete erste Ring 11 ist am Ende der Längsdrähte 8 an deren Innenseite befestigt. Der erste Ring 11 ist nicht geschlossen, sondern weist zwischen zwei benachbarten Längsdrähten 8a eine Unterbrechung 13 auf. Diese Unterbrechung 13 ermöglicht es in Verbindung mit der Elastizität des verwendeten Drahtmaterials, den ersten Ring 11 geringfügig aufzuweiten.

Am anderen Ende des Stützkörpers 6 befindet sich der zweite Ring 12, welcher im wesentlichen dieselbe Größe wie der erste Ring 11 aufweist. Der zweite Ring 12 ist allerdings nicht mit den Innenseiten, sondern mit den Außenseiten der Längsdrähte 8 verbunden. Um dies zu ermöglichen, weisen die Längsdrähte 8 unmittelbar vor ihrem Ende eine Abkröpfung 14 auf, die durch zweimaliges rechtwinkliges Biegen der Enden der Längsdrähte 8 gebildet ist. Der zweite Ring 12 ist nicht unmittelbar im Bereich der Biegungen in der Abkröpfung 14 befestigt, sondern mit einem solchen Abstand zur Abbiegung, daß zwischen zweitem Ring 12 und Abkröpfung 14 ein axialer Abstand in Gestalt einer Einsenkung verbleibt. Diese Einsenkung ist so bemessen, daß der erste Ring 11 dort bündig hineinpaßt.

Auch der zweite Ring 12 weist eine Unterbrechung 15 auf, wobei diese Unterbrechung 15 in Verbindung mit der Elastizität des Drahtmaterials dazu dient, den Stützkörper 6 in diesem Bereich zusammenzudrücken, und damit seinen Enddurchmesser zu verkleinern. Dies wird durch den in Fig. 5 oben dargestellten Handgriff erreicht.

Beim Ausführungsbeispiel ist der untenliegende zweite Ring 12 mit einer der Unterbrechung 15 gegenüberliegenden Erweiterung 16 versehen. Diese Erweiterung 16 ist eine nach außen gerichtete Wölbung des zweiten Ringes 12. In Umfangsrichtung des Stützkörpers 6 ist die Erstreckung der Erweiterung 16 gleich dem Abstand zwischen jeweils zwei benachbarten Längsdrähten 8. Wird nun ein oberer Stützkörper auf einen unteren Stützkörper in der in Fig. 5 dargestellten Art und Weise aufgesetzt, wird zunächst die an dem zweiten Ring 12 des oberen Stützkörpers ausgebildete Erweiterung 16 unter den ersten Ring 11 des unteren Stützkörpers geschoben. Hierdurch hintergreift die Erweiterung 16 des zweiten Ringes 12 den entsprechenden Ringabschnitt des ersten Ringes 11. Sodann wird mittels der im oberen Teil der Fig. 5 dargestellten Handbewegung der untere Bereich des oberen Stützkörpers entgegen der Elastizität der Drahtteile zusammengedrückt, bis sich der zweite Ring 12 im Bereich der Unterbrechung 15 nahezu berührt. Durch diesen Arbeitsschritt verringert sich der Durchmesser des zweiten Rings 12, so daß dieser anschließend vollständig bis unter den ersten Ring 11 abgesenkt werden kann. Ein weiteres Absenken ist nicht möglich, da die Abkröpfungen 14 nun auf dem ersten Ring 11 aufliegen. Ist dieser Zustand erreicht, wird die von Hand aufgebrachte Spannung nachgelassen, wodurch der zweite Ring 12 wieder expandiert und der erste Ring 11 des unteren Stützkörpers zwischen den zweiten Ring 12 des oberen Stützkörpers und die dortigen Abkröpfungen 14 gelangt. Die Ringe 11,12 und damit die beiden Stützkörper sind auf diese Weise miteinander verriegelt.

Bei der vorgenannten Art des Zusammenbaus ist die Unterbrechung 13 im ersten Ring 11 des unteren Stützkörpers nicht unbedingt erforderlich. Die Unterbrechung 13 bewirkt jedoch eine gewisse Nachgiebigkeit des ersten Rings 11, so daß sich der zweite Ring 12 leichter einsetzen läßt.

Es ist ferner möglich, anstelle der Erweiterung 16 des zweiten Rings 12 eine Verengung des ersten Rings 11 an der entsprechenden Stelle vorzusehen. Auch in diesem Fall muß gewährleistet sein, daß die Verengung in Umfangsrichtung gleich ist dem Abstand zwischen benachbarten Längsdrähten 8. Nur auf diese Weise wird eine Zentrierung der beiden Stützkörper 6 zueinander erreicht, so daß die Längsdrähte 8 des einen Stützkörpers exakt zu den Längsdrähten 8 des anderen Stützkörpers fluchten.

Fig. 4 läßt erkennen, daß an den untersten Stützkörper der Abschlußdeckel 4 ansetzbar ist. Auch diese Verbindung erfolgt durch das bereits anhand der Fig. 5 erläuterte Zusammendrücken und anschließende Entspannen des zweiten Rings 12.

### Bezugszeichenliste

- 1: Gehäusewand
- 2: Filterboden
- 3: Filterschlauch
- 4: Abschlußdeckel
- 5: Filterstützkorb
- 6: Stützkörper
- 7: Trennebene
- 8: Längsdraht
- 8a: Längsdraht
- 10: Zwischenring
- 11: erster Ring
- 12: zweiter Ring
- 13: Unterbrechung
- 14: Abkröpfung
- 15: Unterbrechung
- 16: Erweiterung, Wölbung

## Patentansprüche

1. Stützkörper für schlauchförmige Filterelemente aus flexiblem Filtermaterial mit
a) Längsdrähten (8,8a), die nach Art eines Korbes angeordnet sind und im wesentlichen die äußere Gestalt des Stützkörpers bestimmen,
b) einem an dem einen Ende des Stützkörpers angeordneten, an den Innenseiten der Längsdrähte (8,8a) befestigten ersten Ring (11),
c) an dem anderen Ende des Stützkörpers ausgebildeten, nach innen versetzt geformten Abkröpfungen (14) der Längsdrähte (8,8a),
d) einem mit den abgekröpften Enden der Längsdrähte (8,8a) verbundenen, an deren Außenseiten befestigten zweiten Ring (12), wobei zwischen zweitem Ring (12) und Abkröpfung (14) ein axialer Abstand vorhanden ist, der zur Aufnahme des ersten Rings (11) eines weiteren Stützkörpers vorgesehen ist,
e) einer Unterbrechung (13,15) des ersten Rings (11) und/oder des zweiten Rings (12) zwischen zwei benachbarten Längsdrähten (8a) sowie
f) einer der Unterbrechung (13,15) gegenüberliegenden Erweiterung (16) des zweiten oder Verengung des ersten Rings, wobei die Erstreckung der Erweiterung (16) bzw. Verengung in Umfangsrichtung gleich ist dem Abstand zwischen benachbarten Längsdrähten (8,8a).

2. Stützkörper nach Anspruch 1, dadurch gekennzeichnet, daß erster und zweiter Ring (11 bzw. 12) dieselbe Größe aufweisen.

3. Stützkörper nach Anspruch 1 oder Anspruch 2, dadurch gekennzeichnet, daß Ringe (11,12) und Längsdrähte (8,8a) aus metallischen Runddrähten bestehen.

4. Stützkörper nach einem der vorangehenden Ansprüche, dadurch gekennzeichnet, daß die Abkröpfungen (14) durch zweimaliges rechtwinkliges Biegen der Enden der Längsdrähte (8,8a) gebildet sind.

5. Stützkörper nach einem der vorangehenden Ansprüche, dadurch gekennzeichnet, daß die Erweiterung (16) bzw. Verengung durch eine geeignete Verformung des jeweiligen Ringes gebildet ist.
